Europäisches Patentamt

European Patent Office

Office européen des brevets

(11) Publication number: **0 248 363 B1**

## EUROPEAN PATENT SPECIFICATION

(45) Date of publication of patent specification: **02.09.92**  (51) Int. Cl.⁵: **G02C 1/08**

(21) Application number: **87107805.1**

(22) Date of filing: **29.05.87**

(54) Closure device for spectacle frame fronts.

(30) Priority: **06.06.86 IT 8254086**

(43) Date of publication of application:
**09.12.87 Bulletin 87/50**

(45) Publication of the grant of the patent:
**02.09.92 Bulletin 92/36**

(84) Designated Contracting States:
**CH DE FR LI**

(56) References cited:
**EP-A- 0 160 259**      **FR-A- 2 164 074**
**US-A- 2 062 342**      **US-A- 2 083 772**
**US-A- 2 103 421**      **US-A- 3 758 203**

(73) Proprietor: **CELES OPTICAL S.p.A.**
**Via Feltrina 11**
**I-31040 Pederobba (Province of Treviso)(IT)**

(72) Inventor: **Sartor, Rino**
**Via Trevignano 9**
**I-31044 Montebelluna(IT)**

(74) Representative: **Modiano, Guido et al**
**MODIANO, JOSIF, PISANTY & STAUB**
**Modiano & Associati Via Meravigli, 16**
**I-20123 Milano(IT)**

## Description

The present invention relates to a closure device for spectacle frame fronts, and in particular to a closure device for spectacle frame fronts having closing tubes.

Metal spectacle frames are currently in use which, in order to allow the mounting and the removal of the lenses, are provided with their rims open, usually at the rod coupling.

The joining of these rims is performed by means of a threaded screw which is inserted at two tubes projecting at the free facing ends of each rim.

Usually, both tubes are provided with a through hole, one of the two being furthermore threaded.

The main disadvantage found in such known types of closure devices resides in the fact that during lens replacement and therefore during the unscrewing of the screw, it often occurs that said screw is uncoupled from the threaded tube: then, as a consequence of the elastic return of the metallic element, the rim opens immediately, possibly causing the slippage of the lens out of its seat and its probable breakage.

Moreover, during the joining of the rims there is the disadvantage of having to align the tubes with respect to one another.

There are also known, as for example from the document U.S.-A-2 103 421, spectacle frames with rims which are split in the region bellow the bridge, the ends of the split rims being held together by pairs of interlocking lugs kept in engagement by fusible material retaining elements which are melted in order to block such interlocked lugs. Obviously such a type of closure device has the disadvantage of a difficult dismounting, the removal of the retaining element supposing its re- melting.

In metal frames of the above described types it is also usual to weld a nose-pad holder to one of said tubes or lugs.

This solution entails some disadvantages, due to the fact that in case of breakage of the nose-pad holder it is difficult to re-weld it, such an operation in any case altering the aesthetic appearance of the frames due to the high temperatures reached by welding.

The main aim of the present invention is therefore to overcome all of the problems encountered in the known types of closure devices for spectacle frame fronts.

Within this aim, an object of the invention is to eliminate the disadvantages described above in known types by providing a device which allows the rapid and optimum closure and opening of the rims, simultaneously allowing the arrangement of a nose-pad holder in an optimum position.

Also within the scope of the above-cited aim, a further important object is to provide a device which associates with the preceding characteristic that of allowing a simple and rapid replacement and/or mounting of the lenses in safety conditions.

Another object is to provide a closure device which allows the rapid and simple replacement of the nose-pad holder without thereby altering the overall aesthetic characteristics of the frames.

The aim and the objects mentioned above, as well as others which will become apparent hereinafter, are achieved by a closure device for spectacle frame fronts according to the characterizing part of claim 1. Further characteristics and advantages of the invention will become apparent from the detailed description of a particular, but not exclusive, embodiment, illustrated only by way of non-limitative example in the accompanying drawings, wherein:

Fig. 1 is a rear view of a spectacle front, illustrating the device associated therewith;

Fig. 2 is a cross section view taken along the longitudinal mid-axis of the tubes;

Fig. 3 is a lateral view of the spectacle front with the device associated therewith;

Fig. 4 is a partial cross sectional view taken along a longitudinal axis, of the components of the closure device;

Fig. 5 is a cross sectional view taken along the plane V-V of fig. 2;

Fig. 6 is a perspective view of another aspect of the closure device for spectacle frame fronts according to the invention;

Figs. 7 and 8 are two views of the device of figure 6 along mutually perpendicular planes;

Fig. 9 is a view of a further aspect of the closure device for spectacle frame fronts according to the invention; and

Fig. 10 is a view along a cross section plane of figure 9.

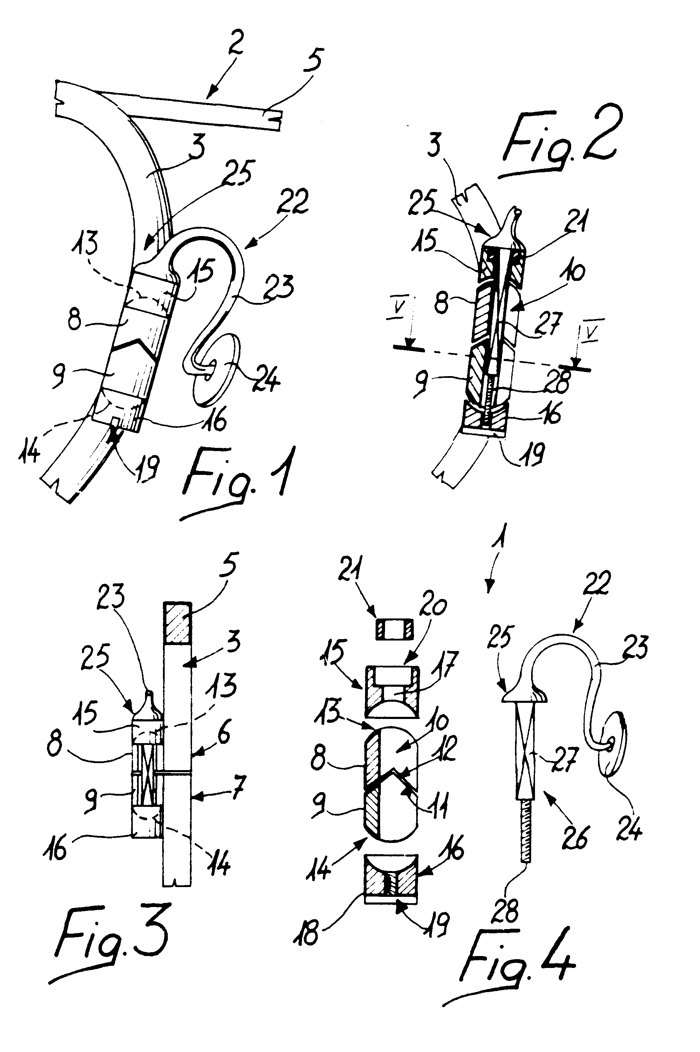

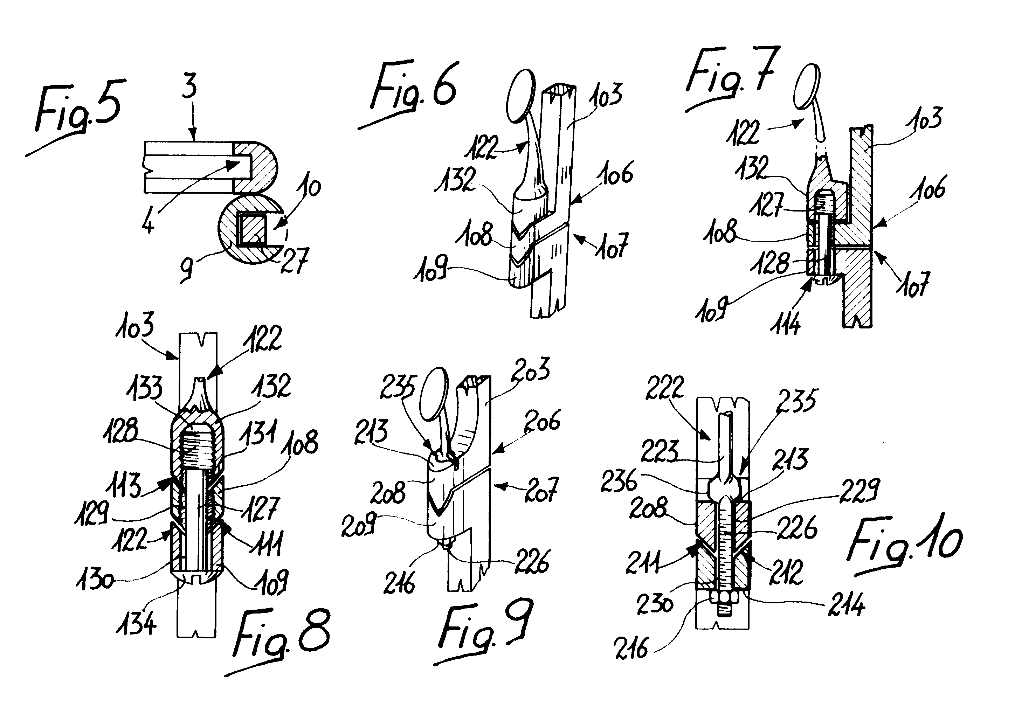

With reference to the above described figures, the closure device 1 for spectacle frame fronts 2 comprises two bezels or rims 3, internally provided with a seat 4 for the perimetric borders of the lenses.

Each rim is open at a region underlying the bridge 5 of the spectacle front 2 to define a mutually facing first end 6 and a second end 7.

A first tube 8 and a second tube 9, both cylindrical and projecting from these ends towards the rear of the spectacle front and therefore directed towards the face of the user, are respectively welded to said ends, which are to be joined together to allow the mounting and/or the replacement of the lens.

At both tubes 8 and 9, a longitudinal milling 10 is provided, affecting their entire extension and approximately three quarters of their diameter, said milling being provided on a plane parallel to the plane of arrangement of said rims 3.

The facing surfaces of the two tubes, indicated by the reference numerals 11 and 12, are provided with such a configuration as to allow the mutual guided engagement, the first surface 11 in fact having a prismatic configuration with triangular transverse cross section, the second surface 12 being shaped complementarily with respect to the first surface 11.

The non-facing ends of said first and said second tubes, indicated respectively by the numerals 13 and 14, have an essentially hemispherical shape, each one cooperating with a locking element consisting of a cap 15 and a nut 16, both cylindrical and provided with an end shaped complementarily with respect to the ends 13 and 14.

Both said cap and said nut are provided with an axial hole, indicated respectively by the numerals 17 and 18.

The hole 18 is internally threaded, the free end of the nut 16 being provided with a diagonal slot 19.

The cap 15 is instead provided, at the end not interacting with the end 13 of the tube 8, with a cylindrical seat 20 for an elastically deformable element expediently consisting of a cylindrical rubber spring 21 accommodatable therein.

The closure device is furthermore composed of a nose-pad holder 22 consisting of a curved metal wire 23, an end whereof may be articulated or rigidly connected to a nose-pad 24, for example by being embedded therein, said nose-pad preferably being made of plastic material, its other end advantageously defining a convex region 25, having a diameter corresponding to the outer diameter of said spring 21 and interacting therewith.

Axially with respect to said region 25 there projects a shaft 26 provided with a first region 27, having a substantially square transverse cross section defining a width dimension approximately equal to the width of the milling 10 and a diagonal dimension which is slightly smaller than the diameter of the hole 17, and a second region 28 threaded complementarily with respect to the threading 18 provided in the nut 16.

The use of the closure device is thus as follows: initially, the pre-assembly is performed of the nose-pad holder 22 inserting the shank 26 in sequence into the spring 21, in the hole 17 of the cap 15 and partially screwing the threaded portion 28 into the nut 16.

After this, the tubes 8 and 9 are manually joined to each other, this step being facilitated by the shape of the surfaces 11 and 12 thereof, superimposing the cap 15 and the nut 16 on the hemispherical surfaces 13 and 14 of said tubes.

This operation can be performed since the shaft 26 can be inserted at the milling 10 provided in both tubes.

It is then sufficient to slightly screw the nut 16 so as to prevent the uncoupling thereof, together with the cap 15, from the tubes 8 and 9.

Once this condition is achieved, between the tubes there is still a certain play which allows, for example, the replacement or the mounting of the lens in the adapted seats 4 of the rims 3.

The final step entails, once the lens is mounted, the locking of the nut 16 and thus the perfect closure of the tubes.

In order to effect replacement of the lenses, it is sufficient to unscrew the nut 16 by such a number of turns as to allow the partial uncoupling of the tubes 8 and 9 so as to be able to extract the lens.

In case of breakage of the wire 23 or of the nose-pad 24 of the nose-pad holder 22, it is possible to replace the same rapidly and quickly uncoupling it from said tubes, together with the cap 15, and from the nut 16.

It has thus been observed that the invention achieves the intended aim and objects, a device having been obtained which allows the rapid and optimum opening of the rims and the simultaneous optimum arrangement of the nose-pad holder thereon.

The replacement and/or the mounting of the lenses is furthermore very simple and rapid, without there being any danger of losing any element during assembly and disassembly.

Moreover, if damaged, the nose-pad holder is easily and rapidly replaceable.

Naturally, the invention thus conceived is susceptible to numerous modifications and variations, all of which are within the scope of the same inventive concept.

Thus, for example, the convex region 25 of the nose-pad holder 22 may be welded or may form a monolithic body with the end 13 of the tube 8, such a condition facilitating the assembly of the various parts and therefore being more competitive in terms of cost.

Naturally, the materials, as well as the dimensions of the various components, may also be any according to the requirements.

Figs. 6, 7 and 8 illustrate another embodiment of the invention.

In this case, the rim 103 is split at the region underlying the front bridge; from the first end 106 and from the second end 107 are projecting a first tube 108 and a second tube 109.

According to this embodiment of the invention, the surface 111 of the tube 108 is provided with a prismatic configuration having a triangular transverse cross section, the facing surface 112 of the tube 109 being shaped complementarily for guided engagement therewith.

Both tubes are provided with an axial hole, indicated respectively by the reference numerals 129 and 130, said holes having the same diameter, the first being internally threaded.

The surface 113 of the tube 108 opposite the surface 111 is provided with a configuration similar to that of the surface 112 of the tube 109, and interacts with a complementarily shaped surface 131 provided at the ends of a small cylinder 132 whereto is welded a nose-pad holder 122.

Said small cylinder 132 has an axially extending, internal threading 133 equal in diameter to that of the holes 129 and 130, said threading being open at the surface 131.

The closure device is completed by a screw 134, the head whereof interacts with the plane surface 114 of the tube 109, the shaft of said screw being provided with a first portion, threaded complementarily with respect to said seats 133 and said hole 129, and with a second portion 127 wherein the threading is depressed.

The height of said first portion 128 is such as to allow the partial uncoupling of the surfaces 111 and 112 of the tubes 108 and 109, the tube 108 being in any case connected by virtue of said portion 128, to the small cylinder 132 supporting the nose-pad holder 122.

Also in this case, therefore, the intended aim and the objects are achieved, it being possible to move the tubes mutually apart by an amount sufficient to replace the lens without uncoupling the screw 134 from said tubes.

The nose-pad holder is also easily replaceable in a rapid manner.

Figs. 9 and 10 illustrate a further embodiment of the invention, which also comprises a rim 203 split at a region underlying the front bridge.

At the ends 206 and 207 of said rim project a first tube 208 and a second tube 209, the first tube 208 defining a prismatic surface or portion 211 with triangular transverse cross section, said surface cooperating with a facing and complementarily shaped surface 212 of the tube 209.

The surface 213 of the tube 208, opposite to the surface 211, is planar, there also being provided a transverse milling 235.

The surface 214 of the tube 209 is also planar.

Both tubes 208 and 209 are provided with an axial through hole indicated respectively by the reference numerals 229 and 230.

A nose-pad holder 222 completes the closure device, and its metal wire 223 is provided with a riveted or upturned zone 236 such as to allow its insertion into the milling 235, beyond said riveting there being provided a threaded shank 226.

Said shank is insertable in the holes 229 and 230, its terminal end being retained by means of a nut 216 abutting at the surface 214 of the tube 209.

Also in this case the proposed solution achieves the proposed aim and the objects, it being sufficient to slacken the nut 216 and to slightly uncouple the tubes 208 and 209 from one another, to replace the lens.

In case of breakage of the nose-pad holder, the same is also easily replaceable as it can be extracted from the tubes, its position remaining in any case stable by virtue of the presence of the riveting 236 which can be positioned inside the milling 235.

Also for these other aspects of the invention, the materials and the dimensions of the individual components may be any, according to the specific requirements.

## Claims

1. A spectacle frame (2) comprising
   - a bridge (5),
   - two lens holding rims (3, 103) connected by said bridge (5), each of the rims being split in a region adjacent the bridge to allow the insertion of a lens and
   - two nose pad holders, each of the nose pad holders being attachable to a separate one of said rims,
   - and a closure device provided on each of the rims for securing together the ends (6, 7, 106, 107, 206, 207) of the split rims,
     characterized in that each of the closure devices comprises
   - two tubes (8, 9, 108, 109, 208, 209), one of said tubes being mounted on one end and the other of said tubes being mounted on the other end of the split rim in such a way that a first end portion of one tube faces a second end portion of the other tube, the facing end portions (11, 12, 111, 112, 211, 212) of the tubes being of complementary shape for the purpose of a mutual engagement and the axis of the tubes being substantially collinear to each other when the split rim is closed, and
   - locking means comprising a locking element (16, 134, 216) and one of said nose pad holders (22, 122, 222) for securing together the tubes of the respective rim, the locking element and the nose pad holder being arranged at the second end portion of the tubes and having connecting means (26, 127, 226) extending through said tubes and bringing the locking member and the nose pad holder into threaded engagement with each other.

2. A spectacle frame according to claim 1, characterized in that said first tube (8) and said second tube (9) are both cylindrical and are mounted with respect to the spectacle front (2) on the side facing the user.

3. A spectacle frame according to claims 1 and 2, characterized in that both said first (8) and said second (9) tubes are provided with a longitudinal milling (10) extending over the entire length of the tubes and having a width of approximately three quarters of the tube diameter, said milling being provided on a plane parallel to the plane of said rim (3).

4. A spectacle frame according to claims 1, 2 and 3, characterized in that the end portion of said second tube (9) facing the end portion of the first tube has a prismatic configuration with a triangular transverse cross section; and in that the non-facing end portions (13,14) of said first tube (8) and of said second tube (9) have an essentially hemispherical shape.

5. A spectacle frame according to claims 1 and 4, characterized in that the locking means comprise furthermore a cap (15) in that the locking element is a nut (16); the nut and the cap being cylindrical and having one end complementarily shaped to the non-facing end portions (13,14) of said first tube (8) and said second tube (9); and in that said cap (15) is provided with an axial through-hole (17,18) and said nut (16) with a threaded axial hole, said cap (15) and said nut (16) being mounted respectively on the non-facing end portions of said first tube (8) and said second tube (9).

6. A spectacle frame according to claim 5, characterized in that the locking means comprise furthermore a cylindrically, elastically deformable element (21) having an axial throughhole, in that said cap (15) is provided, at the end not facing said first tube (8), with a cylindrical cavity (20) for said elastically deformable element; and in that said nut (16) is provided, at the end not abutting on said second tube (9), with a substantially diametral slot (19).

7. A spectacle frame according to the preceding claims, characterized in that the nose-pad holder (22) comprises a curved element (23) having at one end, a portion connected to a nose-pad (24), an intermediate portion (25) approximately equal in diameter to the outer diameter of said elastically deformable element (21) on which said intermediate portion abuts when the nose pad holder is mounted, and, at the other end, a shank portion (26) projecting axially from the intermediate portion, said shank portion comprises a first portion (27) having a square transverse cross section and a second portion (28) threaded complementarily with respect to the threading (18) provided on said nut (16).

8. A spectacle frame according to claim 7, characterized in that said cross sectional square of said first portion (27) of said shank (26) of said nose-pad holder (22) has a side length approximately equal to the width of said milling (10); and in that the diagonal dimension of said cross sectional square is slightly smaller than the diameter of the hole (17) provided on said cap (15).

9. A spectacle frame according to claims 1, 2 and 3 characterized in that the end portion of said first tube (108) facing said second tube (109) has a prismatic shape with triangular transverse cross section, which shape is complementary with respect to that of said second tube (109); and in that the non-facing surface (112) of said first tube (108) is substantially planar.

10. A spectacle frame according to claims 1 and 9, characterized in that both said first tube (108) and said second tube (109) are provided with an axial through-hole (129,130), the through-hole of said first tube (108) having an internal threading.

11. A spectacle frame according to claims 1, 9 and 10, characterized in that one end of said nose-pad holder (122) is formed as a cylinder (132) which, when mounted, abuts on said first tube (108), and which has an end surface (131) shaped complementarily with respect to the prismatic end portion of said first tube, said cylinder (132) being provided with an axially extending internal threading (133) equal in diameter to that of the threading (129) of said first tube (108).

12. A spectacle frame according to claims 1, 9, 10 and 11, characterized in that the locking element is a screw (134), the head of which, when mounted, abuts on the planar surface (114) of said second tube (109), the shank of said screw being provided with a first portion threaded complementarily with respect to said axial threading of said cylinder and said threading provided in said first tube (108), and with a second portion (127), which is adjacent to said head and which has a smooth cylindrical surface; the axial extensions of said smooth and threaded portions being such that they enable, in the course of the mounting process, a state in which said first tube (108) is movable on the shank of the screw with respect to said second tube (109), and in which the said cylinder (132) and said first tube (108) are connected by the threading of the screw.

13. A spectacle frame according to claims 1, 2 or 3, characterized in that the nose pad holder comprises an intermediate portion having a flattened zone (236); and in that said first tube (208) has, at the end portion (213) not facing said second tube (209), a diagonal milling (235) defining a seat for the flattened zone (236), provided on said nose pad holder; and in that said first tube (208) and said second tube (209) have formed therein an axial through hole (229,230).

14. A spectacle frame according to claim 13, characterized in that said nose-pad holder (222) comprises a threaded shank (226) insertable in said axial holes (229,230) formed in said first tube (208) and said second tube (209); and in that the locking element is a nut (216) having a threading complementary to that of the nose pad holder, said shank (226) cooperating at the free end with said nut (216) which, when mounted, abuts on the planar surface (214) of said second tube (209).

**Patentansprüche**

1. Ein Brillengestell (2), umfassend
   - eine Brücke (5),
   - zwei durch die Brücke (5) verbundene Fassungen (3, 103) zur Linsenhalterung, wobei jede der Fassungen in dem der Brücke benachbarten Bereich geteilt ist, um das Einsetzen einer Linse zu ermöglichen und
   - zwei Nasenpolster-Halter, von denen jeder an jeweils einer der Fassungen montierbar ist, und
   - eine Schließvorrichtung, die an jeder der Fassungen zum Zusammenhalten der Enden (6, 7, 106, 107, 206, 207) der geteilten Fassungen vorgesehen ist, dadurch **gekennzeichnet,** daß jede der Schließvorrichtungen umfaßt
   - zwei Röhrchen (8, 9, 108, 109, 208, 209), von denen eines an einem Ende und das andere am anderen Ende der geteilten Fassung derart angebracht ist, daß ein erster Endabschnitt eines Röhrchens einem zweiten Endabschnitt des anderen Röhrchens gegenüberliegt, wobei die sich gegenüberliegenden Endabschnitte (11, 12, 111, 112, 211, 212) der Röhrchen zur Verbindung mit einander komplementär geformt sind und die Achsen der Röhrchen bei geschlossener Fassung im wesentlichen kollinear zueinander verlaufen, und
   - Verriegelungsmittel, umfassend ein Verriegelungselement (16, 134, 216) und einen der genannten Nasenpolster-Halter (22, 122, 222) zum Zusammenhalten der Röhrchen der jeweiligen Fassung, wobei das Verriegelungselement und der Nasenpolster-Halter am zweiten Endabschnitt der Röhrchen angeordnet sind und Verbindungsmittel (26, 127, 226) haben, welche innerhalb der Röhrchen verlaufen und das Verriegelungselement und den Nasenpolster-Halter in Schraubverbindung miteinander bringen.

2. Ein Brillengestell nach Anspruch 1, dadurch **gekennzeichnet,** daß das erste Röhrchen (8) und das zweite Röhrchen (9) beide zylindrisch und bezüglich der Brillenfront auf der dem Benutzer zugewandten Seite angeordnet sind.

3. Ein Brillengestell nach den Ansprüchen 1 und 2, dadurch **gekennzeichnet,** daß sowohl das erste Röhrchen (8) als auch das zweite Röhrchen (9) mit einer Längsfräsung (10) versehen sind, welche sich über die gesamte Länge der Röhrchen erstreckt und eine Breite von ungefähr dreiviertel des Röhrchendurchmessers besitzt, wobei die Fräsung in einer zur Ebene der Fassung (3) parallelen Ebene verläuft.

4. Ein Brillengestell nach den Ansprüchen 1, 2 und 3, dadurch **gekennzeichnet,** daß der Endabschnitt des zweiten Röhrchens (9), der dem Endabschnitt des ersten Röhrchens zugewandt ist, eine prismatische Form mit dreieckigem Transversalquerschnitt hat und daß die sich nicht gegenüberliegenden Endabschnitte (13, 14) des ersten Röhrchens (8) und des zweiten Röhrchens (9) im wesentlichen Halbkugelform besitzen.

5. Ein Brillengestell nach den Ansprüchen 1 und 4, dadurch **gekennzeichnet,** daß die Verriegelungsmittel ferner eine Kappe (15) umfassen, daß das Verriegelungselement eine Mutter (16) ist, wobei die Mutter und die Kappe zylindrisch sind und ihr eines Ende komplementär zu den sich nicht gegenüberliegenden Endabschnitten (13, 14) des ersten Röhrchens (8) und des zweiten Röhrchens (9) geformt ist, und daß die Kappe (15) mit einer axialen Durchbohrung (17, 18) und die Mutter (16) mit einer axialen Gewindebohrung versehen ist, wobei die Kappe (15) und die Mutter (16) respektive an den sich nicht gegenüberliegenden Endabschnitten des ersten Röhrchens (8) und des zweiten Röhrchens (9) angeordnet sind.

6. Ein Brillengestell nach Anspruch 5, dadurch **gekennzeichnet,** daß die Verriegelungsmittel ferner ein zylindrisches, elastisch deformierbares Teil (21) mit axialer Durchbohrung umfassen, daß die Kappe (15) an dem dem ersten Röhrchen (8) abgewandten Ende mit einem zylindrischen Hohlraum (20) für das genannte elastisch deformierbare Teil versehen ist und daß die Mutter (16) an dem Ende, das nicht an dem zweiten Röhrchen (9) anliegt, mit einem im wesentlichen diametralen Schlitz (19) versehen ist.

7. Ein Brillengestell nach den vorangegangenen Ansprüchen, dadurch **gekennzeichnet,** daß der Nasenpolster-Halter (22) ein gebogenes Teil (23) umfaßt, welches an einem Ende einen mit einem Nasenpolster (24) verbundenen Abschnitt, einen Zwischenabschnitt (25) mit einem Durchmesser ungefähr gleich dem des elastisch deformierbaren Teiles (21), an dem der Zwischenabschnitt anliegt, wenn der Nasenpolster-Halter montiert ist, und am anderen Ende einen Schaftabschnitt (26) hat, der axial von dem Zwischenabschnitt absteht und einen ersten Abschnitt (27) mit quadratischem Transversalquerschnitt, sowie einen zweiten Abschnitt (28) umfaßt, der mit einem zum Gewinde (18) der Mutter (16) komplementären Gewinde versehen ist.

8. Ein Brillengestell nach Anspruch 7, dadurch **gekennzeichnet,** daß die Seitenlänge des Querschnittsquadrats besagten ersten Abschnittes (27) des Schaftes (26) des Nasenpolster-Halters (22) ungefähr so lang ist wie die Breite der Fräsung (10) und daß die Diagonalabmessung des Querschnittsquadrats etwas kleiner ist als der Durchmesser des in der Kappe (15) vorgesehenen Loches (18).

9. Ein Brillengestell nach den Ansprüchen 1,2 und 3, dadurch **gekennzeichnet,** daß der Endabschnitt des ersten Röhrchens (108), das dem zweiten Röhrchen (109) gegenüber liegt, eine prismatische Form mit dreieckigem Transversalquerschnitt aufweist, wobei diese Form komplementär zu derjenigen des zweiten Röhrchens (109) ist, und daß die nicht gegenüberliegende Oberfläche (112) des ersten Röhrchens (108) im wesentlichen eben ist.

10. Ein Brillengestell nach den Ansprüchen 1 und 9, dadurch **gekennzeichnet,** daß sowohl das erste Röhrchen (108) als auch das zweite Röhrchen (109) mit einer axialen Bohrung versehen sind, wobei die Durchbohrung des ersten Röhrchens (108) ein Innengewinde besitzt.

11. Ein Brillengestell nach den Ansprüchen 1, 8 und 10, dadurch **gekennzeichnet,** daß ein Ende des Nasenpolster-Halters (122) als Zylinder (132) geformt ist, der in montiertem Zustand an dem ersten Röhrchen (108) anliegt und eine Endfläche (131) hat, welche komplementär zu dem prismatischen Endabschnitt des ersten Röhrchens geformt ist, wobei der Zylinder (132) mit einem sich axial erstreckenden Innengewinde (133) versehen ist, welches den gleichen Durchmesser wie das Gewinde (129) des ersten Röhrchens (108) besitzt.

12. Ein Brillengestell nach den Ansprüchen 1, 9, 10 und 11, dadurch **gekennzeichnet,** daß das Verriegelungsteil eine Schraube (134) ist, deren Kopf im montierten Zustand an der ebenen Oberfläche (114) des zweiten Röhrchens anliegt, wobei der Schaft besagter Schraube einen ersten Abschnitt, der mit einem zu dem axialen Gewinde des Zylinders und dem im ersten Röhrchen (108) vorgesehenen Gewinde komplementären Gewinde versehen ist, und einen zweiten Abschnitt (127) hat, der sich an den Kopf anschließt und eine glatte zylindrische Oberfläche hat, wobei die axialen Abmessungen des glatten und des mit Gewinde versehenen Abschnittes solcherart sind, daß sie im Verlauf der Montage einen Zustand ermöglichen, in dem das erste Röhrchen (108) auf dem Schaft der Schraube bezüglich des zweiten Röhrchens (109) beweglich ist und in dem der Zylinder (132) und das erste Röhrchen (108) durch das Gewinde der Schraube verbunden sind.

13. Ein Brillengestell nach den Ansprüchen 1, 2 oder 3, dadurch **gekennzeichnet,** daß der Nasenpolster-Halter einen Zwischenteil mit einem abgeplatteten Bereich (236) aufweist und daß das erste Röhrchen (108) an dem Endabschnitt (213), der dem zweiten Röhrchen (209) nicht gegenüber liegt, eine diagonale Fräsung (235) hat, welche einen Sitz für den abgeplatteten Bereich (236) an besagtem Nasenpolster-Halter bildet, und daß in dem ersten Röhrchen (208) und dem zweiten Röhrchen (209) eine axiale Durchbohrung (229, 230) ausgebildet ist.

**14.** Ein Brillengestell nach Anspruch 13, dadurch **gekennzeichnet,** daß der Nasenpolster-Halter (222) einen Gewindeschaft (226) besitzt, der in die axialen Bohrungen (229, 230), die im ersten Röhrchen (208) und im zweiten Röhrchen (209) ausgebildet sind, eingesetzt werden kann, und daß das Verriegelungsteil eine Mutter (216) ist, welche mit einem Gewinde versehen ist, das komplementär zu dem des Nasenpolster-Halters ist, wobei der Schaft (226) an dem freien Ende mit der Mutter (216) zusammenwirkt, die im montierten Zustand an der ebenen Oberfläche (214) des zweiten Röhrchens (209) anliegt.

**Revendications**

**1.** Monture de lunettes (2) comprenant :
- un pont (5) ;
- deux cercles (3, 103) de support des lentilles reliés par ledit pont (5), chacun des cercles étant fendu dans une zone adjacente au pont pour permettre l'insertion d'une lentille ;
- deux supports de plaquette de nez, chacun des supports de plaquette de nez pouvant être fixé à l'un ou l'autre desdits cercles ; et
- un dispositif de fermeture prévu sur chacun des cercles pour fixer ensemble les extrémités (6, 7, 106, 107, 206, 207) des cercles fendus ;
caractérisée en ce que chacun des dispositifs de fermeture comprend :
- deux tubes (8, 9, 108, 109, 208, 209), l'un desdits tubes étant monté sur une extrémité et l'autre desdits tubes étant monté sur l'autre extrémité du cercle fendu de façon qu'une première partie d'extrémité d'un tube fait face à une seconde partie d'extrémité de l'autre tube, les parties d'extrémités en vis-à-vis (11, 12, 111, 112, 211, 212) des tubes présentant des formes complémentaires dans le but d'un engagement mutuel, et les axes des tubes étant sensiblement colinéaires l'un à l'autre quand le cercle fendu est fermé ; et
- des moyens de verrouillage comprenant un élément de verrouillage (16, 134, 216) et l'un desdits supports de plaquette de nez (22, 122, 222) pour fixer ensemble les tubes du cercle respectif, l'élément de verrouillage et le support de plaquette de nez étant agencés au niveau de la seconde partie d'extrémité des tubes et ayant des moyens de liaison (26, 127, 226) s'étendant à travers lesdits tubes et permettant l'engagement par vissage de l'organe de verrouillage et du support de plaquette de nez l'un avec l'autre.

**2.** Monture de lunettes selon la revendication 1, caractérisée en ce que ledit premier tube (8) et ledit second tube (9) sont tous les deux cylindriques et sont montés par rapport à la face (2) des lunettes sur le côté faisant face à l'utilisateur.

**3.** Monture de lunettes selon les revendications 1 et 2, caractérisée en ce qu'à la fois lesdits premier (8) et second (9) tubes sont munis d'un fraisage longitudinal (10) s'étendant sur toute la longueur des tubes et ayant une largeur d'approximativement les trois quarts du diamètre des tubes, ledit fraisage étant prévu dans un plan parallèle au plan dudit cercle (3).

**4.** Monture de lunettes selon les revendications 1, 2 et 3, caractérisée en ce que la partie d'extrémité dudit second tube (9) faisant face à la partie d'extrémité du premier tube présente une configuration prismatique ayant une section transversale triangulaire, et en ce que les parties d'extrémité non en vis-à-vis (13, 14) dudit premier tube (8) et dudit second tube (9) présentent une forme sensiblement hémisphérique.

**5.** Monture de lunettes selon les revendications 1 et 4, caractérisée en ce que les moyens de verrouillage comprennent de plus un capuchon (15), en ce que l'élément de verrouillage est un écrou (16), l'écrou et le capuchon étant cylindriques et ayant une extrémité de forme complémentaire aux parties d'extrémité non en vis-à-vis (13, 14) dudit premier tube (8) et dudit second tube (9), et en ce que ledit capuchon (15) est muni d'un trou traversant axial (17, 18) et ledit écrou (16) d'un trou axial taraudé, ledit capuchon (15) et ledit écrou (16) étant montés respectivement sur les parties d'extrémité non en vis-à-vis dudit premier tube (8) et dudit second tube (9).

**6.** Monture de lunettes selon la revendication 5, caractérisée en ce que les moyens de verrouillage comprennent de plus un élément cylindrique élastiquement déformable (21) présentant un trou traversant axial, en ce que ledit capuchon (15) est muni, à l'extrémité qui n'est pas en vis-à-vis dudit premier tube (8), d'une cavité cylindrique (20) pour ledit élément élastiquement déformable, et en ce que ledit écrou (16) est muni, à l'extrémité qui n'est pas en aboutement sur ledit second tube (9), d'une fente sensiblement diamétrale (19).

7. Monture de lunettes selon les revendications précédentes,
caractérisée en ce que le support de plaquette de nez (22) comprend un élément incurvé (23) ayant, à une extrémité, une partie reliée à une plaquette de nez (24), une partie intermédiaire (25) de diamètre approximativement égal au diamètre externe dudit élément élastiquement déformable (21) sur lequel ladite partie intermédiaire vient en aboutement quand le support de plaquette de nez est monté et, à l'autre extrémité, une partie formant tige (26) faisant saillie axialement de la partie intermédiaire, ladite partie formant tige comprenant une première partie (27) ayant une section transversale carrée et une seconde partie (28) filetée de façon complémentaire par rapport au taraudage (18) prévu dans ledit écrou (16).

8. Monture de lunettes selon la revendication 7,
caractérisée en ce que ladite section transversale carrée de ladite première partie (27) de ladite tige (26) dudit support de plaquette de nez (22) présente une longueur latérale approximativement égale à la largeur dudit fraisage (10), et en ce que la dimension diagonale de ladite section transversale carrée est légèrement plus petite que le diamètre du trou (17) prévu dans ledit capuchon (15).

9. Monture de lunettes selon les revendications 1, 2 et 3,
caractérisée en ce que la partie d'extrémité dudit premier tube (108) faisant face audit second tube (109) présente une forme prismatique ayant une section transversale triangulaire, laquelle forme est complémentaire par rapport à celle dudit second tube (109), et en ce que la surface non en vis-à-vis (112) dudit premier tube (108) est sensiblement plane.

10. Monture de lunettes selon les revendications 1 et 9,
caractérisée en ce qu'à la fois ledit premier tube (108) et ledit second tube (109) sont munis d'un trou traversant axial (129, 130), le trou traversant dudit premier tube (108) étant muni d'un taraudage.

11. Monture de lunettes selon les revendications 1, 9 et 10,
caractérisée en ce qu'une extrémité dudit support de plaquette de nez (122) est formée en tant que cylindre (132) qui, quand il est monté, vient en aboutement sur ledit premier tube (108), et qui présente une surface d'extrémité (131) conformée de façon complémentaire par rapport à la partie d'extrémité prismatique dudit premier tube, ledit cylindre (132) étant muni d'un taraudage s'étendant axialement (133) de diamètre égal à celui du taraudage (129) dudit premier tube (108).

12. Monture de lunettes selon les revendications 1, 9, 10 et 11,
caractérisée en ce que l'élément de verrouillage est une vis (134), dont la tête, quand elle est montée, vient en aboutement sur la surface plane (114) dudit second tube (109), la tige de ladite vis étant munie d'une première partie filetée de façon complémentaire par rapport audit taraudage axial dudit cylindre et audit taraudage prévu dans ledit premier tube (108), et d'une seconde partie (127) qui est adjacente à ladite tête et qui présente une surface cylindrique lisse, les extensions axiales desdites parties lisse et filetée étant telles qu'elles permettent, au cours du processus de montage, un état dans lequel ledit premier tube (108) est déplaçable sur la tige de la vis par rapport audit second tube (109), et dans lequel ledit cylindre (132) et ledit premier tube (108) sont reliés par vissage de la vis.

13. Monture de lunettes selon les revendications 1, 2 ou 3,
caractérisée en ce que le support de plaquette de nez comprend une partie intermédiaire ayant une zone aplatie (236), et en ce que ledit premier tube (208) présente, à la partie d'extrémité (213) qui ne fait pas face audit second tube (209), un fraisage diagonal (235) définissant un siège pour la zone aplatie (236) prévue sur ledit support de plaquette de nez, et en ce que ledit premier tube (208) et ledit second tube (209) sont munis d'un trou traversant axial (229, 230).

14. Monture de lunettes selon la revendication 13,
caractérisée en ce que ledit support de plaquette de nez (222) comprend une tige filetée (226) qui peut être insérée dans lesdits trous axiaux (229, 230) formés dans ledit premier tube (208) et ledit second tube (209), et en ce que l'élément de verrouillage est un écrou (216) ayant un filetage complémentaire à celui du support de plaquette de nez, ladite tige (226) coopérant à l'extrémité libre avec ledit écrou (216) qui, quand il est monté, vient en aboutement sur la surface plane (214) dudit second tube (209).

Fig. 1

Fig. 2

Fig. 3

Fig. 4

Fig.5

Fig.6

Fig.7

Fig.8

Fig.9

Fig.10

EP 0 248 363 B1